Europäisches Patentamt

European Patent Office

Office européen des brevets

(19)

(11) Numéro de publication: **0 325 506**

**A1**

(12) **DEMANDE DE BREVET EUROPEEN**

(21) Numéro de dépôt: 89400083.5

(22) Date de dépôt: **11.01.89**

(51) Int. Cl.⁴: **G 07 F 7/10**
**G 06 F 1/00**

(30) Priorité: **20.01.88 FR 8800594**

(43) Date de publication de la demande:
**26.07.89 Bulletin 89/30**

(84) Etats contractants désignés: **DE ES GB IT**

(71) Demandeur: **SGS-THOMSON MICROELECTRONICS S.A.**
**7, Avenue Galliéni**
**F-94250 Gentilly (FR)**

(72) Inventeur: **Bahout, Yvon**
**CABINET BALLOT-SCHMIT 84, Avenue Kléber**
**F-75116 Paris (FR)**

**Lisimaque, Gilles**
**CABINET BALLOT-SCHMIT 84, Avenue Kléber**
**F-75116 Paris (FR)**

(74) Mandataire: **Ballot, Paul Denis Jacques**
**Cabinet Ballot-Schmit 84, avenue Kléber**
**F-75116 Paris (FR)**

(54) **Système de sécurité pour protéger des zones de programmation d'une carte à puce.**

(57) On généralise l'utilisation des cartes (2) à puce (1), avec le niveau de sécurité associé aux cartes à puce de type bancaire, en organisant un envoi (A, B) en sécurité de cartes à puce vierges chez des clients (B) désireux d'y programmer des applications spécifiques. Le système consiste dans l'envoi chez ce client par des chemins séparés (8, 9) de la carte à puce vierge proprement dite et d'une clef (7) d'accès en programmation de cette carte. Pour éviter tous risques supplémentaires, la clef d'accès est elle-même chiffrée (11) et ne peut être déchiffrée (14) que par un organe de déchiffrage détenu par le client. La programmation de la carte ne peut alors être assurée que si cette carte est confrontée (10) à sa clef déchiffrée.

FIG_1

EP 0 325 506 A1

Bundesdruckerei Berlin

Description

## SYSTEME DE SECURITE POUR PROTEGER DES ZONES DE PROGRAMMATION D'UNE CARTE A PUCE

La présente invention a pour objet un système de sécurité pour protéger des zones de programmation d'une carte à puce. Les cartes à puce dont il est question sont des cartes à mémoire dont l'organe de mémorisation est un circuit intégré électronique connu sous le nom de puce. De telles cartes sont utilisées dans le domaine bancaire : elles servent de moyens de paiement en assurant à la fois la gestion d'un compte par la signification du solde qui y est enregistré et par la comptabilisation des différents mouvements qu'il subit, et à la sauvegarde de son utilisation par l'introduction d'un code secret. De par leur destination de telles cartes à mémoire sont placées dans une ambiance dans laquelle le principal danger à éviter réside dans le défaut de sécurité. De nombreux systèmes ont été perfectionnés dans ce but. L'objet de la présente invention est de pouvoir mettre à la disposition des autres domaines de l'industrie, des domaines autres que le domaine bancaire, des cartes à puce à fonctionnalité différente, mais possédant par ailleurs un même niveau de sécurité de certaines de leurs zones de programmation.

Les applications des cartes à puces dans le domaine bancaire sont bien connues. En résumé elles consistent, en gestion courante, à créditer ou à débiter le compte géré dans la carte, au besoin en autorisant une certaine ligne de crédit à certains clients. D'autre part elles doivent permettre une utilisation sûre par la reconnaissance d'un code secret connu du détenteur de la carte. De manière à n'introduire aucun risque dans la distribution des cartes à mémoire, le secteur bancaire a retenu une pratique simple de fabrication de ces cartes. Les fabricants d'électronique sont investis par contrat de plusieurs missions. Leur première mission consiste à fabriquer les circuits intégrés et les cartes qui les contiennent. Une seconde mission consiste à programmer directement les circuits intégrés fabriqués (et qui ont par ailleurs un caractère universel) pour les rendre aptes à servir à des applications bancaires maintenant bien connues et en définitive assez simples.

A ce stade de fabrication les fabricants ont en outre pour mission de coder le code secret d'accès à la carte, d'envoyer ce code secret d'accès au futur détenteur de cette carte (au client de la banque), tandis que la carte elle-même est envoyée à la banque. Lorsque le futur détenteur de la carte reçoit son code secret d'accès, son code d'utilisation, il est en même temps prévenu de la nécessité d'aller chercher sa carte à la banque. On aboutit ainsi au résultat qu'en aucun cas la carte et le code secret d'accès ne voyagent, physiquement, de manière détectable en même temps sur un même moyen de transport. Cette procédure d'envoi donne maintenant entière satisfaction et offre une bonne résistance aux tentatives de vol ou de fraude.

En pratique aucun moyen n'existe pour retrouver le code secret d'accès, le code d'utilisation de la carte, à partir du numéro de compte client qui y est indiqué dessus. La perte du numéro de code secret d'accès entraîne d'ailleurs la nécessité de détruire la carte : elle est inutilisable. En outre le fabricant peut alors se livrer à toutes les procédures, notamment de type technologique, qui interdisent le piratage du contenu de la carte. Les cartes bancaires sont en fait technologiquement inviolables.

Dans d'autres applications que celles du domaine bancaire il est nécessaire de s'entourer d'une même ambiance de sécurité. Par exemple un détenteur d'une carte doit pouvoir accéder dans des endroits stratégiques intéressant la défense nationale, et, dans ces endroits, être autorisé à effectuer avec cette carte un certain nombre d'opérations. La différence essentielle que présentent ces opérations avec les opérations bancaires est que ces dernières opérations ne sont a priori pas connues par le fabricant de cartes. Il ne peut donc les y programmer. Il est donc nécessaire que ce fabricant de cartes exporte chez son client, gérant ces cartes, des moyens techniques pour réaliser certaines des opérations de fabrication. Ces opérations de fabrication viennent conclure des opérations de programmation spécifiques effectuées par ce client, elles assurent la sécurité recherchée. En simplifiant on peut dire que ces opérations peuvent consister en un verrou logistique interdisant, ultérieurement à la fermeture de ce verrou, la programmation de certaines zones de la carte, ou la lecture de certaines zones programmées de cette carte. Cette solution n'est cependant pas envisageable quand le client n'a pas l'intention de fabriquer et d'utiliser un très grand nombre de cartes. Il ne lui est pas possible d'investir suffisamment de moyens dans une application à utilisation limitée. Dans la solution alternative on comprend facilement les réticences d'un tel client, a fortiori s'il représente la défense nationale d'un pays, à expliquer à un fabricant de circuits intégrés des algorithmes d'utilisation à introduire dans les cartes et dont il veut garder le secret.

Le problème des fabricants est donc de mettre à la disposition de ces clients, intéressés par des applications spécifiques, des cartes à puce jouissant d'un système de sécurité technologique et en utilisation dont le niveau est équivalent à celui actuellement mis en oeuvre dans le système bancaire sans que les coûts de fabrication atteignent des valeurs prohibitives (exportation des moyens de fabrication du fabricant chez le client), et sans que le client soit obligé de divulguer quelle application spécifique il entend programmer dans ses cartes. Une solution simple consisterait à transmettre à ce client de telles cartes à puce, avec le code secret d'accès, d'utilisation ultérieure, afin qu'il les programme dans son application spécifique. A la fin de cette programmation il pourrait alors basculer un verrou logique qui empêcherait irrémédiablement un accès aux zones programmées de cette carte à puce (de manière à ce qu'un fraudeur ou un voleur ne puisse en aucun cas tenter de reconstituer des algorithmes secrets qui y ont été enregistrés).

L'inconvénient présenté par ce procédé est que dans ces conditions les cartes voyagent sans aucune sécurité. Et pour cause puisque la sécurité a pour but d'en interdire la programmation ultérieure alors que cette programmation n'a pas encore eu lieu et que c'est justement pour aller la subir que ces cartes voyagent. On se trouve alors confronté à la situation suivante dans laquelle des systèmes à fonctionnalité très puissante circulent dans des moyens de transport classiques (postes, trains). Les systèmes peuvent être interceptés avant leur arrivée à leur destinataire par des gens mal intentionnés qui pourraient être tentés de les programmer à leur manière en vue de contrefaire une application dont ils ont par ailleurs connaissance et à laquelle ils n'ont pas normalement accès.

L'invention a pour objet de remédier à ces inconvénients en proposant un système de sécurité pour protéger les zones de programmation d'une carte à puce dans lequel, dans le principe, au moment de la fabrication de la carte une clef de programmation est élaborée. Dans la pratique cette clef est une clef logique : elle est représentée par une suite d'état logique binaire, décimaux ou autres. Cette clef logique est acheminée vers le client par des voies différentes que celles qu'emprunte l'acheminement de la carte à puce proprement dite. Autrement dit l'interception de la carte seule est insuffisante pour permettre son détournement d'utilisation. Sans la clef de programmation cette carte est inutilisable. Par contre le client normal, lui, en recevant la carte et la clef peut en introduisant la clef logique dans la carte avoir accès aux zones de programmation de cette carte. Lorsque cette programmation est terminée il peut demander à la carte (faire exécuter à la carte un programme préenregistré dans ce but) qu'elle produise sa propre clef d'utilisation (différente par essence bien entendu de la clef de programmation). Une fois que cette clef d'utilisation est connue, ce client peut verrouiller la programmation de la carte en faisant basculer un verrou technologique irréversible. Ce client n'a plus alors qu'à distribuer ses cartes de la même manière que le faisait le fabricant de cartes à puce dans l'application bancaire.

Dans un perfectionnement, la clef de programmation est chiffrée. Ceci signifie que la clef qui voyage n'est pas directement utilisable pour valider les opérations de programmation de la carte. La clef de programmation doit d'abord être déchiffrée avant d'être appliquée à la carte. Dans ce perfectionnement le fabricant possède une machine de chiffrement alors que le client possède une machine de déchiffrement. On évite ainsi qu'un voleur habile, qui arriverait à se procurer en même temps la clef de programmation et la carte, ne puisse malgré tout effectuer avec sa carte des opérations malhonnêtes.

Dans un autre perfectionnement la fonction clef de programmation dans la carte comporte une fonction à lecture unique. Cette fonction n'est prévue que pour reconnaître une seule fois la bonne clef. Si la reconnaissance reconnaît une mauvaise clef, ou si on tente une deuxième programmation après avoir effectué la première, et après avoir coupé l'alimentation de la carte, cette fonction de programmation a basculé et est devenue inaccessible.

L'invention concerne donc un système de sécurité pour protéger des zones de programmation d'une carte à puce, ce système comportant un verrou logique ouvert avant la programmation de ces zones de programmation, et que l'on peut fermer après cette programmation, caractérisé en ce qu'il comporte une clef de programmation, et dans la carte, une fonction clef d'accès en programmation pour permettre la programmation de ces zones de la carte.

L'invention sera mieux comprise à la lecture de la description qui suit et à l'examen des figures qui l'accompagnent. Celles-ci ne sont données qu'à titre indicatif et nullement limitatif de l'invention. Les figures montrent :

- figure 1 : un schéma de principe d'un système de sécurité conforme à l'invention.
- figure 2 : une carte à puce munie de zones mémoires à protéger;
- figure 3 : un exemple d'un circuit de validation de la clef de programmation.

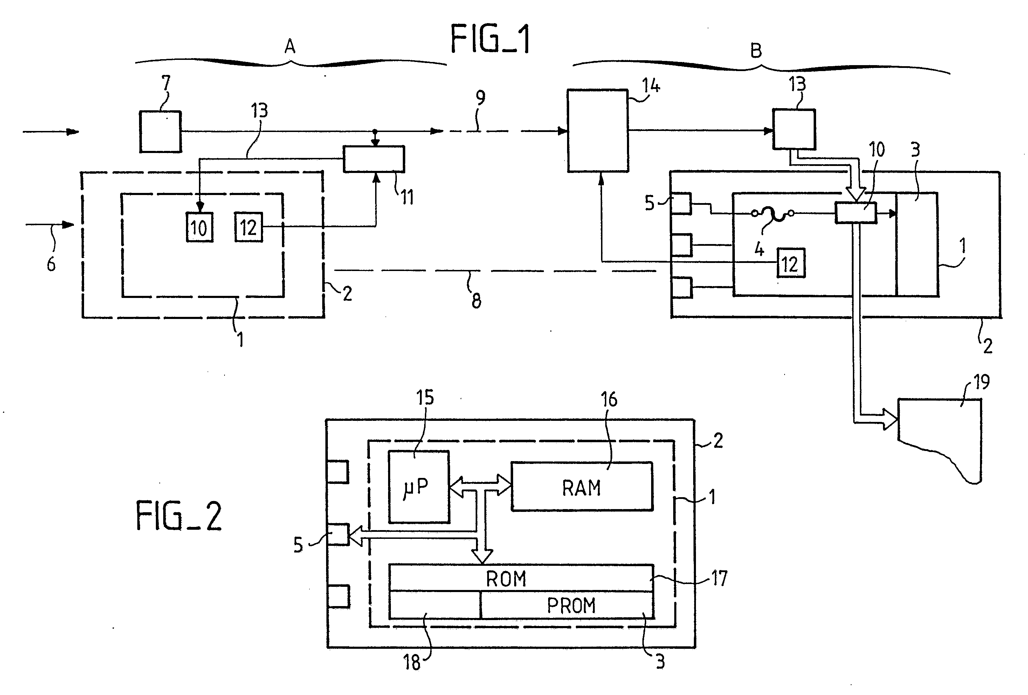

La figure 1 représente un système de sécurité conforme à l'invention. Dans ce système des opérations A sont réalisées par un fabricant de circuits intégrés électroniques sur des circuits intégrés 1 contenus dans des cartes à puce 2 tandis que des opérations de programmation B sont effectuées par le client sur des zones de programmation 3 du circuit intégré 1 de la carte à puce 2. Dans ce système les circuits intégrés 1 possèdent un verrou logique 4 ouvert avant la programmation des zones de programmation 3. Par exemple, pour simplifier, le verrou logique ouvert peut être constitué par un fusible établissant une liaison électrique entre des métallisations d'accès 5 à la carte 1 et des connexions d'accès aux zones de programmation 3. Lorsque le verrou est ouvert, lorsque le fusible est en bon état, les signaux électriques peuvent passer. Lorsque le verrou est fermé, lorsque le fusible a été claqué, les signaux électriques ne peuvent plus passer assurant la protection définitive des zones 3 concernées. La présentation du verrou logique sous la forme d'un fusible 4 est une représentation symbolique. Le verrou logique peut, selon des formes connues, être remplacé par une matrice de décision recevant en entrée les signaux électriques à transmettre et n'assurant la transmission de ces signaux que si leur nature est conforme à un dessin décisionnel complexe. La présence de tels verrous logiques est connue, et la fermeture de ces verrous, laquage du fusible ou validation de la matrice de décision, ne font pas directement partie de l'invention. En effet avant la programmation les zones mémoires 3, la fonctionnalité du circuit intégré 2 doit être la plus universelle possible. Ceci signifie que le client doit pouvoir y programmer tout ce qu'il désire.

Au moment de la fabrication, symbolisée par la flèche 6, de la carte 2 munie de son circuit intégré 1 le fabricant élabore en même temps une clef de programmation 7, la clef de programmation de l'invention, pour permettre la programmation des zones de la carte. Tandis que la carte est envoyée au client selon un itinéraire 8, la clef de programmation lui est envoyée par un itinéraire différent 9. Lorsqu'il reçoit la clef de programmation 7 le client l'introduit selon un protocole simple dans le circuit intégré 1. Cette introduction peut prendre la forme d'une injection de signaux électriques correspondant à cette clef, en série dans la carte par une métallisation 5 donnant accès au circuit intégré 1. Ce circuit intégré 1 comporte alors un circuit 10 de décodage de la clef constituant en quelque sorte une fonction clef d'accès en programmation. Ce circuit de décodage 10 autorise alors la transmission des signaux électriques de programmation dans la mémoire 3. Le circuit 10 peut être tel que sa désactivation électrique, par exemple par rupture du courant d'alimentation de la carte à mémoire, l'amène à basculer de manière irréversible dans un état où il n'est plus susceptible d'accepter une quelconque clef de programmation 7. Cependant, avant de couper cette alimentation, le client - utilisateur - a tout loisir de programmer les instructions qui l'intéressent dans la zone de programmation 3 du circuit intégré 2.

De manière à rendre inopérante la saisie par un voleur de la clef 7 simultanément avec la saisie de la carte à puce correspondante 2, la clef 7 n'est pas acheminée telle quelle sur son chemin 9. De préférence, elle est plutôt chiffrée par une machine de chiffrement 11. La machine 11 reçoit d'une part la clef 7 et d'autre part un numéro de fabrication 12 identifiant la carte 2.

La machine 11 produit une clef chiffrée 13. La clef chiffrée 13 produite est alors introduite dans le circuit de décodage 10. La clef 7 ne sert alors plus à rien si elle est interceptée telle quelle. A son arrivée la clef 7 est introduite conjointement avec le numéro de fabrication 12 dans un déchiffreur 14 qui reproduit aussi la véritable clef 13 (sous la forme d'une suite d'état logique). Il suffit alors au moment de la programmation de mettre en correspondance la clef 13 reproduite avec la bonne carte 2 repérée par son numéro de fabrication 12.

Les appareils de chiffrement 11 et de déchiffrement 14 sont de type connus. Ils ont des transcodeurs. Ils restent à demeure, au moins pendant un certain temps chez le fabricant A d'une part et chez le client B d'autre part. Ils peuvent néanmoins être modifiés régulièrement, bien sûr d'une manière complémentaire l'un de l'autre. Dans ces conditions il n'y a aucun risque à voir tomber la clef 7 entre les mains d'un voleur : il ne peut rien en faire.

La figure 2 montre une carte à puce 2 munie de son circuit intégré 1. Ce circuit intégré comporte dans une application à caractère universel un microprocesseur 15 en relation avec une mémoire de traitement 16, une mémoire morte 17, et une mémoire programmable 3. Dans les applications bancaires envisagées, la mémoire morte 17 est tellement figée qu'elle ne fait qu'autoriser la mise en place de données dans la mémoire programmable 3. C'est se priver d'une grande partie de la fonctionnalité d'un tel circuit intégré. Dans les applications autorisées par l'invention, avec le niveau de sécurité obtenu, la fonctionnalité de la carte peut être déterminée à volonté par le client qui la programme en conséquence. La mémoire morte 17 peut alors être préprogrammée avec des commandes plus ambitieuses que des commandes qui ne feraient qu'autoriser une fonctionnalité restreinte à une application bancaire. En fonction de la nature du verrou 4 qui ne serait est plus alors un verrou symbolique mais une matrice de décision, on peut ensuite mettre à la disposition du porteur de la carte tout ou partie de la zone mémoire de programmation 3. Par exemple, on pourra interdire des opérations de lecture, et de transmission à l'extérieur, de codes secrets ou d'algorithmes de traitement contenus dans une région 18 de la zone de programmation 3. Cette restriction d'utilisation est cependant d'un type connu et ne fait pas directement partie de l'invention.

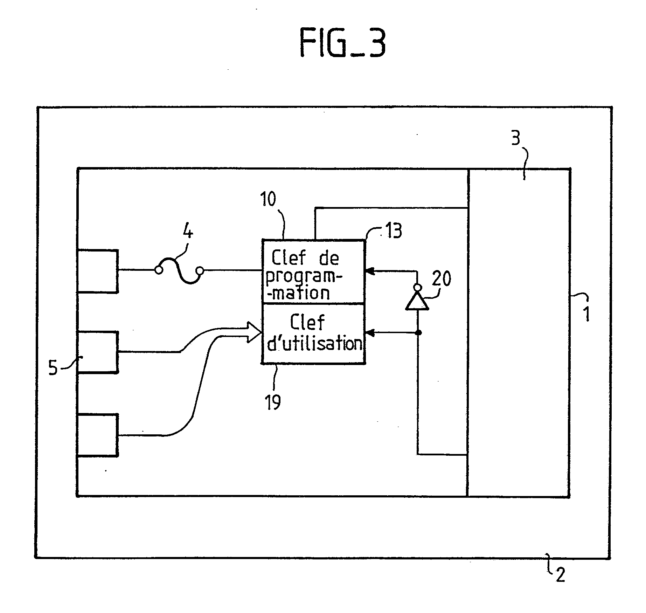

La figure 3 représente schématiquement un circuit de validation de la clef de programmation 13 qui ne peut être activée qu'une seule fois. Lorsque les opérations de programmation de la zone de programmation 3 ont été effectuées, le client peut substituer à la clef d'accès en programmation (écrite lors de la fabrication) une clef d'utilisation 19 de la carte 2. Cette clef d'utilisation peut même être élaborée par un algorithme introduit dans la région 18 de la zone de programmation 3 et auquel une matrice de décision adéquate peut ensuite interdire l'accès. Un inverseur logique commandé 20 (couplé ou non avec le basculement du verrou 4) permet de valider la mise en service dans le circuit 10 d'une des deux clefs. Cet inverseur peut être à retour définitivement irréversible. En outre le circuit 10 qui décode les clefs peut être tel qu'une seule mauvaise présentation de la clef de programmation ou de la clef d'utilisation implique sa désactivation définitive et donc l'invalidation de programmation ou d'utilisation de la carte. Cette désactivation peut être provoquée par une sortie d'un comparateur qui mémorise un défaut de présentation.

## Revendications

1- Système de sécurité (A, B) pour protéger des zones (3) mémoires de programmation d'une carte (2) à puce (1), ce système comportant un verrou logique (4), ouvert avant la programmation desdites zones mémoires, et qu'on peut fermer après cette programmation, caractérisé en ce qu'il comporte une clef de programmation (7), et, dans la carte, une fonction (10) clef d'accès en programmation, pour permettre la programmation de ces zones de la carte, et en ce que cette clef est une clef logique chiffrée (11, 14).

2- Système selon la revendication 1 caractérisée en ce que la clef est chiffrée en fonction d'un numéro (12) de fabrication de la carte.

3- Système selon la revendication 1 ou la revendication 2 caractérisé en ce qu'il comporte un dispositif (11) de chiffrement de la clef pour produire la clef de programmation, et un dispositif (14) de déchiffrement de la clef de programmation pour permettre l'accès en programmation de la mémoire.

4- Système selon une quelconque des revendications 1 à 3 caractérisé en ce que le verrou (4) est du type irréversible.

5- Système selon l'une quelconque des revendications 1 à 4, caractérisé en ce que le verrou comporte des moyens de matrice de décision pour interdire l'exécution de certaines instructions dans la carte.

6- Système selon l'une quelconque des revendications 1 à 5 caractérisé en ce que le circuit intégré comporte un microprocesseur (15), une mémoire morte (17), une mémoire programmable (3), en ce que la mémoire morte comporte des moyens pour programmer la mémoire programmable, et en ce que la fonction accès en programmation est prévue pour éventuellement interdire la programmation ultérieure de zones mémoires (18) programmables de la carte.

7- Système selon l'une quelconque des revendications 1 à 6 caractérisé en ce que la fonction clef d'accès en programmation comporte des moyens pour n'autoriser qu'une seule fois la lecture de la clef de programmation.

8- Système selon l'une quelconque des revendications 1 à 7 caractérisé en ce que la fonction clef de programmtion comporte des moyens pour s'invalider définitivement (20) lorsqu'une fausse clef de programmation lui est appliquée.

FIG_1

A                    B

7        13                    9        14        13

10   12              11

10   3

5                    4    12              1

6        2              8        2

19

FIG_2

15        16

μP    →    RAM    1    2

5                    17

ROM

PROM

18        3

EP 0 325 506 A1

# FIG_3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-4 105 156 (J.D. DETHLOFF)<br>* Résumé; figure 2; colonne 5, ligne 15 - colonne 6, ligne 43 * | 1,4,6-8 | G 07 F 7/10<br>G 06 F 1/00 |
| A | --- | 2,5 | |
| Y | EP-A-0 089 876 (CII HONEYWELL BULL)<br>* Résumé; figure * | 1 | |
| A | --- | 3 | |
| A | US-A-4 268 911 (A.G. BELL)<br>* Résumé; colonne 1, ligne 39 - colonne 2, ligne 27 *<br>--- | 1,4 | |
| A | L'ONDE ELECTRIQUE, vol. 64, no. 1, janvier-février 1984, pages 18-23, Paris, FR; C. GUION: "La carte à mémoire: choix technologiques et caractéristiques"<br>* Page 20, colonne de gauche à partir de: "La sécurité d'accès aux données" *<br>--- | 1,4,6 | |
| A | WO-A-8 705 420 (DATA CARD)<br>--- | | |
| A | US-A-4 613 937 (J.R. BATTY)<br>--- | | |
| A | EP-A-0 218 176 (TOSHIBA)<br>--- | | |
| P,A | GB-A-2 206 431 (MOTOROLA)<br>* Résumé; figures 1-3; revendications *<br>----- | 1,4,6-8 | |

**DOMAINES TECHNIQUES RECHERCHES (Int. Cl.4)**

G 07 F
G 06 F

**Le présent rapport a été établi pour toutes les revendications**

| Lieu de la recherche | Date d'achèvement de la recherche | Examinateur |
|---|---|---|
| LA HAYE | 20-04-1989 | DAVID J.Y.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................
& : membre de la même famille, document correspondant

EPO FORM 1503 03.82 (P0402)